# EUROPÄISCHE PATENTSCHRIFT

(11) **EP 0 780 619 B1**
(45) Veröffentlichungstag und Bekanntmachung des Hinweises auf die Patenterteilung: **16.05.2001**
(21) Anmeldenummer: 96117923.1
(22) Anmeldetag: 08.11.1996
(51) Int. Cl.: F16L 27/04, F02F 1/40

(54) **Steckstück**
Plug-in piece
Pièce enfichable

(30) Priorität: 22.12.1995 DE 19548249
(43) Veröffentlichungstag der Anmeldung: 25.06.1997
(73) Patentinhaber: Firma Carl Freudenberg, 69469 Weinheim (DE)
(72) Erfinder: Unger, Hans, 69518 Absteinach (DE)

(56) Entgegenhaltungen:
- DE-A- 1 576 725
- DE-A- 2 143 734
- DE-A- 3 418 718
- DE-B- 2 344 327
- GB-A- 2 055 165
- US-A- 5 106 129

## Beschreibung

Die Erfindung betrifft ein Steckstück zur Überbrückung des Zwischenraums zwischen zwei axial beabstandeten Zylinderflächen, deren Längsachsen einen Winkelversatz zueinander aufweisen, umfassend ein Verbindungsrohr, an dem im Bereich der Enden jeweils ein radial vorstehender, ringförmig gestalteter, mit einer der Zylinderflächen in Eingriff bringbarer Dichtring festgelegt ist, wobei der zweite Dichtring auf der der zweiten Zylinderfläche zugewandten Seite mit zumindest zwei axial voneinander beabstandeten Dichtflächen versehen ist und wobei das Verbindungsrohr zumindest einen Radialvorsprung aufweist.

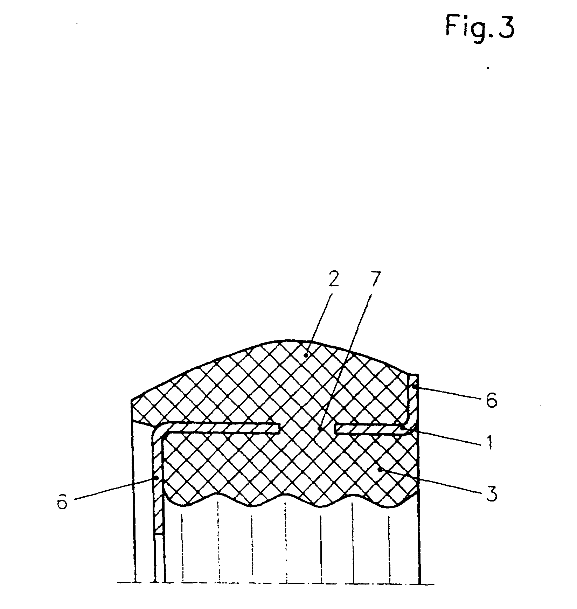

Ein solches Steckstück ist aus der US 5,106,129 bekannt. Das Steckstück ist im wesentlichen zylinderförmig ausgebildet, wobei im Bereich der stirnseitigen Enden des Steckstücks umfangsseitig umlaufende, radial nach außen offene Nuten angeordnet sind und wobei die jeweiligen axialen Begrenzungen der Nuten sowie der Nutgrund einen einstückigen Bestandteil des Steckstücks bilden. Innerhalb der Nuten sind Dichtringe angeordnet, die auf der dem Nutgrund radial abgewandten Seite dichtend an die Zylinderflächen anlegbar sind. Die Dichtringe umschließen den Nutgrund mit radialem Abstand, wobei in dem durch den Abstand gebildeten Spalt ein Federkörper angeordnet ist, der eine in radialer Richtung elastische Anpressung der Dichtringe an die Zylinderflächen bewirkt. In Fig. 3 sind innerhalb der Nut zwei axial zueinander benachbart angeordnete Dichtringe gezeigt, die beispielsweise aus Aluminium bestehen. Die Dichtflächen der Dichtringe, die den jeweiligen Zylinderflächen zugewandt sind, sind, im Querschnitt betrachtet, bogenförmig ausgebildet, um auch bei einem Winkelversatz der jeweiligen Längsachsen der axial zueinander beabstandeten Zylinderflächen funktionsfähig zu sein.

Eine weitere Verbindung ist aus der DE 34 18 718 C2 bekannt. Die Abdichtung gegenüber den Innenwänden einer Bohrung erfolgt dabei durch auf die Hülse aufvulkanisierte Dichtlippen. Dabei wird unter dem Sammelbegriff Dichtlippe ein Dichtzylinder verstanden, der eine oder mehrere radial von dem Dichtzylinder wegweisende Lippen aufweist und/oder in eine oder beide Stirnseiten eines Dichtzylinders eingreifende Aufnehmungen aufweist, so daß tangential zu dem Dichtzylinder liegende Lippen entstehen. Die vorbekannte Hülse dient zur Verbindung zweier flüssigkeitsführender, im wesentlichen zueinander fluchtender Bohrungen. Mit einer solchen Hülse ist es nicht möglich, zwei Bohrungen, deren Längsachsen einen Winkelversatz aufweisen, miteinander zu verbinden. Bei einer dynamischen Beanspruchung einer solchen Verbindung erfolgt aufgrund der Relativbewegung zwischen dem auf die Hülse aufvulkanisierten Elastomer und der mit diesem in Eingriff stehenden Fläche der Bohrung, ein verstärkter Abrieb des Elastomers, was zu Undichtigkeiten führen kann. Um Verspannungen im Bereich der Hülsenmitte der zu verbindenden Bohrungen zu vermeiden, weisen die Dichtlippen im Bereich der Hülsenenden einen größeren Außendurchmesser als im Bereich der Hülsenmitte auf. Die Länge der Hülse ist so bemessen, daß die Hülse in dem Bohrungsende zum Ausgleich von Abstandsänderungen der Bohrungsenden ein axiales Spiel aufweist und daher begrenzt in axialer Richtung relativ in den beiden Bohrungen verschiebbar ist.

Der Erfindung liegt die Aufgabe zugrunde, daß das Steckstück die beiden Zylinderflächen sicher verbindet und eine einfache Montage gewährleistet ist.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß der erste Dichtring auf der ersten Zylinderfläche zugewandten Seite zur Überbrückung des Winkelversatzes nur eine Dichtfläche aufweist, die, im Querschnitt betrachtet, kreissegmentförmig begrenzt ist und daß der Radialvorsprung eine im wesentlichen senkrecht zur Längsachse des Stekstücks verlaufende Fläche als Axialauschlag für eine Stirnfläche der an den Dichtflächen anliegenden Zylinderfläche bildet. Der kreissegmentförmig ausgebildete erste Dichtring gewährleistet ein sicheres, dichtendes Anliegen an der Zylinderfläche auch dann, wenn die Längsachse der Zylinderfläche und die Längsachse des Steckstücks einen Winkelversatz aufweisen. Bei einer Anregung durch Schwingungen und den damit verbundenen Auslenkungen der Verbindungselemente, kann die Zylinderfläche auf dem kreissegmentförmigen ersten Dichtring abrollen, wobei die Dichtheit der Verbindung gewährleistet bleibt Durch das Abrollen wird der Abrieb des Elastomers im Vergleich zu einem Rutschen oder Gleiten aufgrund des verringerten Reibwiderstandes stark reduziert Der zweite Dichtring weist zumindest zwei axial voneinander beabstandete Dichtlippen auf, die radial nach außen oder radial nach innen weisen können. Durch die axiale Erstreckung des zweiten Dichtrings wird die mit ihm in Eingriff gebrachte Zylinderfläche sehr gut geführt, was zu einer hohen mechanischen Stabilität der Verbindung beiträgt. Die Dichtringe sind vorteilhafterweise an das Verbindungsrohr anvulkanisiert, wodurch ein Verlieren beim Transport oder bei der Montage ausgeschlossen ist.

Nach Anspruch 2 sind die beiden Dichtringe durch einen ersten Radialvorsprung des Verbindungsrohres voneinander getrennt. Der erste Radialvorsprung des Verbindungsrohres entsteht dadurch, daß sich der Durchmesser des Verbindungsrohres sprunghaft erweitert Die Größe der Erweiterung sowie des darin festgelegten Dichtrings wird vorteilhafterweise so gewählt, daß der Innendurchmesser des darin eingesteckten Rohres gleich dem Innendurchmesser des nicht erweiterten Teils des Steckstücks ist, wodurch keine Verringerung des Strömungsquerschnitts und damit keine erhöhten Strömungsverluste auftreten. Durch die Erweiterung entsteht am Radialvorsprung eine Fläche, die im wesentlichen senkrecht zur Längsachse des Steckstücks verläuft. Diese kann als axialer Anschlag für zumindest eine Zylinderfläche dienen. Dadurch sind ein sicherer Sitz und eine einfache Montage gewährleistet. Eine Ausführung des Verbindungsrohrs mit einem ersten Radialvorsprung ist auch dann sinnvoll, wenn zwei Zylinderflächen verbunden werden sollen, deren Durchmesser stark unterschiedlich sind. Durch die Erweiterung des Durchmessers des Verbindungsrohrs, kann dieses annähernd auf den Durchmesser der Zylinderflächen aufgeweitet werden, so daß die Materialstärke des Elastomers nur so dick wie nötig gewählt werden muß. Würde ein Verbindungsrohr mit einem konstanten Durchmesser eingesetzt, müßte die gesamte Differenz zwischen den Durchmessern der Zylinderflächen mit elastomerem Material ausgefüllt werden, was einen großen Materialeinsatz und damit große Kosten verursachen würde.

Es hat sich als sehr günstig erwiesen, daß der zweite Dichtring zumindest drei voneinander beabstandete Dichtflächen aufweist. Je größer die Anzahl der Dichtflächen wird, desto größer wird die Labyrinthwirkung der Dichtung. D.h., der Austritt des zu leitenden Mediums in die Umgebung wird mit einer größer werdenden Wahrscheinlichkeit ausgeschlossen. Hierbei muß ein Kompromiß zwischen der Forderung nach Dichtheit, einem sinnvollen Materialeinsatz und der Handhabbarkeit des Steckstücks gefunden werden. Je länger sich der zweite Dichtring in axialer Richtung erstreckt, desto besser wird die axiale Führung der mit ihm in Eingriff stehenden Zylinderflächen. Auch hier ist ein sinnvoller Kompromiß zwischen Gebrauchseigenschaften und Materialeinsatz zu finden.

Eine weitere vorteilhafte Ausgestaltung sieht vor, daß der erste Dichtring und der zweite Dichtring radial in einander entgegensetzter Richtung vorstehen. Durch eine solche Anordnung ist die Verbindung von axial beabstandeten Zylinderinnen- und Zylinderaußenflächen möglich.

Nach Anspruch 5 ist der erste und der zweite Dichtring durch zumindest einen Wanddurchbruch des Verbindungsrohrs hindurch miteinander verbunden. Durch diese Öffnung kann bei der Herstellung des Steckstücks das Polymer hindurchfließen, was eine Vereinfachung bei der Produktion der Steckstücke darstellt. Bei einem derart hergestellten Steckstück, ist das Elastomer auf dem Verbindungsrohr zusätzlich zum Stoffschluß (Anvulkanisieren) durch einen Formschluß festgelegt, wodurch die Verbindung nochmals sicherer wird.

Der erste und der zweite Dichtring sind im wesentlichen derselben Radialebene angeordnet. Bei beengten Einbauräumen nimmt das Steckstück als Verbindungselement keinen zusätzlichen Raum in Längsrichtung ein, da die zu verbindenden Zylinderflächen übereinander geschoben werden können, wobei der Spalt in Umfangsrichtung durch das eingeschobene Steckstück, das radial nach innen und außen dichtend an den Zylinderflächen anliegt, geschlossen wird. Im Falle einer Wärmedehnung beider Zylinderflächen in axialer Richtung, bleibt die Funktion des Steckstücks erhalten, da sich jedes der zu verbindenden Elemente unabhängig voneinander und vom Steckstück in Längsrichtung ausdehnen kann, was bei einer axial benachbarten Anordnung der zu verbindenden Elemente nur begrenzt möglich wäre.

Eine weitere vorteilhafte Ausgestaltung des Steckstücks sieht vor, daß der erste und der zweite Dichtring an den voneinander abgewandten Enden jeweils durch einen zweiten Radialvorsprung des Verbindungsrohrs hintergriffen sind. Dies bietet den Vorteil einer weiteren Erhöhung der mechanischen Stabilität des Verbindungsrohrs, Darüber hinaus wird das Elastomer zusätzlich zum Axialschenkel am radialen Vorsprung des Verbindungsrohrs anvulkanisiert, wodurch die Fläche der Vulkanisation vergrößert wird. Dadurch wird ein Abziehen oder Abschälen des Elastomers vom Verbindungsrohr, auch beim Auftreten großer Kräfte, sicher verhindert.

Zumindest einer der Radialvorsprünge übergreift den jeweiligen Dichtring in radialer Richtung. Ein solcher Anschlag legt den axialen Sitz zumindest einer der Zylinderflächen bezüglich des Steckstücks fest Dies hat den Vorteil, daß eine Leckage aufgrund einer nicht weit genug über den Dichtring geschobenen Zylinderfläche ausgeschlossen wird.

Eine weitere vorteilhafte Ausgestaltung sieht vor, daß die Dichtringe aus Elastomer bestehen und das Elastomer das Verbindungsrohr vollständig umschließt Durch eine solche Umschließung ist das Verbindungsrohr vor Korrosion geschützt. Es wird so eine lange Gebrauchsdauer bei gleichbleibender mechanischer Stabilität garantiert.

Unter Bezugnahme auf die Zeichnungen Fig. 1 bis 3 wird das erfindungsgemäße Steckstück im folgenden näher beschrieben.

Fig. 1 zeigt ein Steckstück mit einem ersten Radialvorsprung des Verbindungsrohrs.

Fig. 2 zeigt ein Steckstück mit einem Radialvorsprung des Verbindungsrohrs der nach innen weist, wobei der Durchmesser des Verbindungsrohrs im weiteren Verlauf des Steckstücks im Vergleich zum Radialvorsprung wieder erweitert ist.

Fig. 3 zeigt ein Steckstück, wobei der erste und der zweite Dichtring an den voneinander abgewandten Enden durch einen radialen Vorsprung des Verbindungsrohrs hintergriffen sind und der radiale Vorsprung den Dichtring 3 in radialer Richtung übergreift und als Axialabschlag für eine der Zylinderflächen gestaltet ist.

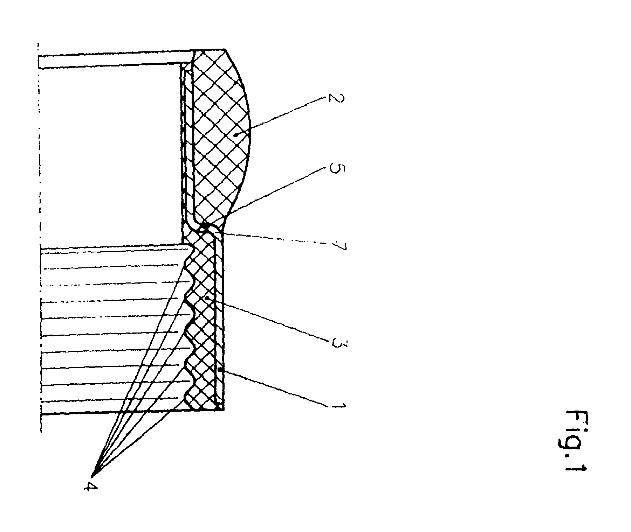

Fig. 1 zeigt ein Steckstück, mit einem ersten Radialvorsprung 5 des Verbindungsrohrs 1, der dadurch entsteht, daß sich der Durchmesser des Verbindungsrohrs 1 sprunghaft erweitert. Durch den Wanddurchbruch 7 des Verbindungsrohrs sind die beiden Dichtringe 2 und 3 miteinander verbunden. Dadurch ist der Dichtring mit dem Verbindungsrohr formschlüssig verbunden. Darüber hinaus ist das Elastomer am Verbindungsrohr anvulkanisiert. Der erste Dichtring 2 weist radial nach außen und ist durch eine im wesentlichen kreissegmentförmige Peripherie begrenzt. Der zweite Dichtring 3 weist radial nach innen und ist im Bereich des erweiterten Durchmessers des Verbindungsrohrs festgelegt. Er weist mehrere, voneinander beabstandete Dichtflächen 4 auf, die ihrerseits wiederum gemäß einem halbkreisförmigen Querschnitt ausgebildet sind. Für den Fall, daß der Wanddurchbruch 7 nicht vorgesehen ist, wird der erste Dichtring 2 und der zweite Dichtring 3 durch den ersten radialen Vorsprung 5 voneinander getrennt. Dadurch ist es möglich, die beiden Dichtringe aus unterschiedlichen Elastomeren herzustellen.

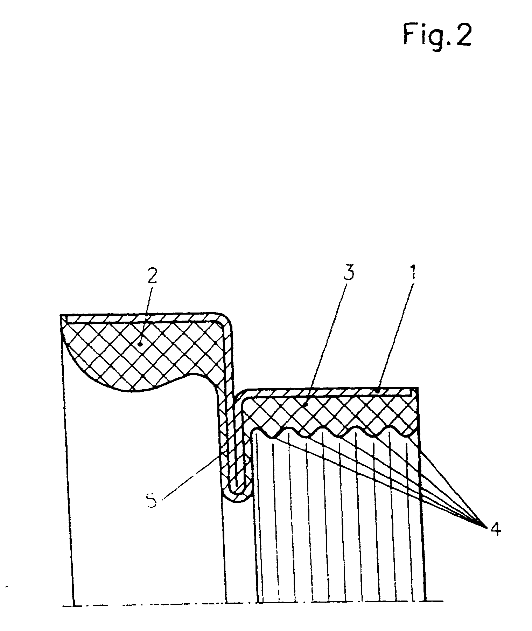

Fig. 2 zeigt ein Steckstück mit einem nach innen weisenden radialen Vorsprung, dessen Innendurchmesser kleiner ist als die Innendurchmesser des in axialer Richtung davor und dahinterliegenden Teils des Verbindungsrohrs 1. Ein so ausgebildetes Steckstück kann zum Beispiel zur Verbindung zweier Zylinderflächen, die einen extrem unterschiedlichen Durchmesser aufweisen, dienen. Der Zwischenraum zwischen den beiden stark unterschiedlichen Durchmessern der Zylinderfläche braucht dabei nicht mit elastomerem Material aufgefüllt zu werden. Die Anpassung des Steckstücks an die unterschiedlich großen Durchmesser der Zylinderflächen erfolgt dabei durch die unterschiedlich großeri Innendurchmesser der beidseitig in axialer Richtung vom Radialvorsprung liegenden Flächen des Steckstücks. An diese wird ein Elastomer in einer den Anforderungen genügenden Dicke anvulkanisiert. Das hier gezeigte Steckstück bietet zudem den Vorteil, daß beide Zylinderflächen durch den radialen Vorsprung bezüglich ihrer axialen Lage zum Steckstück festgelegt sind.

Fig. 3 zeigt ein Steckstück, bei dem der erste Dichtring 2 und der zweite Dichtring 3 in derselben Radialebene angeordnet sind. Zudem sind an den voneinander abgewandten Enden die Dichtringe durch jeweils einen radialen Vorsprung 6 des Verbindungsrohrs 1 hintergriffen. Dabei ist der den Dichtring 3 übergreifende Radialvorsprung als Axialanschlag für eine der Zylinderflächen ausgebildet. Eine solche Dichtungsanordnung ist äußerst raumsparend, da die zu verbindenden Zylinderflächen in axialer Richtung ineinander geschoben werden können.

## Patentansprüche

1. Steckstück zur Überbrückung eines Zwischenraums zwischen zwei axial beabstandeten Zylinderflächen, deren Längsachsen einen Winkelversatz zueinander aufweisen, mit einem Verbindungsrohr (1), an dem im Bereich der Enden jeweils ein radial vorstehender, ringförmig gestalteter, mit einer der Zylinderflächen In Eingriff bringbarer Dichtring (2, 3) festgelegt ist, wobei der zweite Dichtring (3) auf der der zweiten Zylinderfläche zugewandten Seite mit zumindest zwei axial voneinander beabstandeten Dichtflächen (4) versehen ist, und wobei das Verbindungsrohr (1) einen Radialvorsprung (5, 6) aufweist, **dadurch gekennzeichnet**, daß der erste Dichtring (2) auf der der ersten Zylinderfläche zugewandten Seite zur Überbrückung des Winkelversatzes nur eine Dichtfläche aufweist, die im Querschnitt betrachtete kreissegmentförmig begrenzt ist, und daß der Radialvorsprung (5, 6) eine im wesentlichen senkrecht zur Längsachse des Steckstücks verlaufende Fläche als Axialanschlag für eine Stirnfläche der Zylinderfläche bildet.

2. Steckstück nach Anspruch 1, dadurch gekennzeichnet, daß die beiden Dichtringe (2, 3) durch einen ersten Radialvorsprung (5) des Verbindungsrohrs (1) voneinander getrennt sind.

3. Steckstück nach einem der Ansprüche 1 bis 2, dadurch gekennzeichnet, daß der zweite Dichtring (3) zumindest drei voneinander beabstandete Dichtflächen (4) aufweist.

4. Steckstück nach Anspruch 1, dadurch gekennzeichnet, daß der erste Dichtring (2) und der zweite Dichtring (3) radial in einander entgegengesetzter Richtung vorstehen.

5. Steckstück nach Anspruch 4, dadurch gekennzeichnet, daß der erste und der zweite Dichtring (2, 3) durch zumindest einen Wanddurchbruch (7) des Verbindungsrohrs hindurch miteinander verbunden sind.

6. Steckstück nach Anspruch 1, dadurch gekennzeichnet, daß der erste und der zweite Dichtring (2, 3) im wesentlichen in derselben Radialebene angeordnet sind.

7. Steckstück nach Anspruch 6, dadurch gekennzeichnet, daß der erste und der zweite Dichtring (2, 3) an den voneinander abgewandten Enden jeweils durch einen zweiten Radialvorsprung (6) des Verbindungsrohrs (1) hintergriffen sind.

8. Steckstück nach Anspruch 7, dadurch gekennzeichnet, daß zumindest einer der Radialvorsprünge (5, 6) den jeweiligen Dichtring (2, 3) in radialer Richtung übergreift.

9. Steckstück nach einem der Ansprüche 1 bis 8, **dadurch gekennzelchnet**, daß die Dichtringe (2, 3) aus Elastomer bestehen und das Elastomer das Verbindungsrohr (1) vollständig umschließt.

## Claims

1. A plug-in piece for bridging an intermediate space between two axially spaced-apart cylindrical surfaces, the longitudinal axes of which have an angular offset relative to one another, having a connecting tube (1) , to which radially projecting sealing rings (2, 3) which are of annular design and can be brought into engagement with one of the cylindrical surfaces are in each case secured in the region of the ends, the second sealing ring (3), on the side facing the second cylindrical surface, being provided with at least two axially spaced-apart sealing surfaces (4), and the connecting tube (1) having a radial projection (5, 6), characterized in that the first sealing ring (2), on the side facing the first cylindrical surface, has only one sealing surface for bridging the angular offset, and this sealing surface seen in cross section is defined in the shape of a circle segment, and in that the radial projection (5, 6) forms a surface running essentially perpendicularly to the longitudinal axis of the plug-in piece as an axial stop for an end face of the cylindrical surface.

2. A plug-in piece according to claim 1, characterized in that the two sealing rings (2, 3) are separated from one another by a first radial projection (5) of the connecting tube (1).

3. A plug-in piece according to either of claims 1 and 2, characterized in that the second sealing ring (3) has at least three spaced-apart sealing surfaces (4).

4. A plug-in piece according to claim 1, characterized in that the first sealing ring (2) and the second sealing ring (3) project radially in opposite directions to one another.

5. A plug-in piece according to claim 4, characterized in that the first and second sealing rings (2, 3) are connected to one another through at least one wall aperture (7) of the connecting tube.

6. A plug-in piece according to claim 1, characterized in that the first and second sealing rings (2, 3) are arranged essentially in the same radial plane.

7. A plug-in piece according to claim 6 characterized in that a second radial projection (6) of the connecting tube (1) engages in each case behind the first and second sealing rings (2, 3) at the ends facing away from one another.

8. A plug-in piece according to claim 7, characterized in that at least one of the radial projections (5, 6) overlaps the respective sealing ring (2, 3) in the radial direction.

9. A plug-in piece according to one of claims 1 to 8, characterized in that the sealing rings (2, 3) are made of elastomer, and the elastomer completely encloses the connecting tube (1).

## Revendications

1. Pièce enfichable pour franchir un espace entre deux surfaces cylindriques distancées axialement dont les axes longitudinaux présentent un décalage angulaire l'un par rapport à l'autre, comprenant un tube de jonction (1) sur lequel est fixée, au niveau des extrémités, respectivement une bague d'étanchéité (2, 3) saillant radialement, de forme annulaire, susceptible d'être mise en prise avec une des surfaces cylindriques, la deuxième bague d'étanchéité (3) située sur le côté orienté vers la deuxième surface cylindrique étant pourvue d'au moins deux surfaces d'étanchéité (4) distancées axialement l'une de l'autre et le tube de jonction (1) présentant une saillie radiale (5, 6), caractérisée en ce que, afin de franchir le décalage angulaire, la première bague d'étanchéité (2) située sur le côté orienté vers la première surface d'étanchéité présente seulement une surface d'étanchéité qui, vue en coupe transversale, est limitée par une forme en segment de cercle, et en ce que la saillie radiale (5, 6) forme une surface s'étendant essentiellement verticalement à l'axe longitudinal de la pièce enfichable, faisant office de butée axiale pour une surface frontale de la surface cylindrique.

2. Pièce enfichable selon la revendication 1, caractérisée en ce que les deux bagues d'étanchéité (2, 3) sont séparées l'une de l'autre par une première saillie radiale (5) du tube de jonction (1).

3. Pièce enfichable selon l'une des revendications 1 à 2, caractérisée en ce que la deuxième bague d'étanchéité (3) présente au moins trois surfaces d'étanchéité (4) distancées l'une de l'autre.

4. Pièce enfichable selon la revendication 1, caractérisée en ce que la première bague d'étanchéité (2) et la deuxième bague d'étanchéité (3) saillissent radialement en une direction opposée l'une à l'autre.

5. Pièce enfichable selon la revendication 4, caractérisée en ce que la première et la deuxième bague d'étanchéité (2, 3) communiquent entre elles par au moins une ouverture de paroi (7) à travers le tube de jonction.

6. Pièce enfichable selon la revendication 1, caractérisée en ce que la première et la deuxième bague d'étanchéité (2, 3) sont agencées essentiellement dans le même plan radial.

7. Pièce enfichable selon la revendication 6, caractérisée en ce que la première et la deuxième bague d'étanchéité (2, 3), aux extrémités opposées l'une à l'autre, sont soutenues à l'arrière par respectivement une deuxième saillie radiale (6) du tube de jonction (1).

8. Pièce enfichable selon la revendication 7, caractérisée en ce qu'au moins une des saillies radiales (5, 6) recouvre la bague d'étanchéité (2, 3) respective en sens radial.

9. Pièce enfichable selon l'une des revendications 1 à 8, caractérisée en ce que les bagues d'étanchéité (2, 3) sont en élastomère et que l'élastomère enveloppe entièrement le tube de jonction (1).
